# EUROPEAN PATENT SPECIFICATION

(11) **EP 0 433 031 B1**
(45) Date of publication and mention of the grant of the patent: **23.02.1994**
(21) Application number: 90313472.4
(22) Date of filing: 11.12.1990
(51) Int. Cl.: B24D 3/34

(54) **Abrasive elements**
Schleifkörper
Corps abrasifs

(30) Priority: 11.12.1989 GB 8927983
(43) Date of publication of application: 19.06.1991
(73) Proprietor: MINNESOTA MINING AND MANUFACTURING COMPANY, St. Paul, Minnesota 55133-3427 (US)
(72) Inventor: Stubbs, Roy, Nuneaton, Warwickshire, CV11 6NW (GB)
(74) Representative: Bowman, Paul Alan

(56) References cited:
- GB-A- 2 136 011
- US-A- 3 997 302
- US-A- 4 786 546
- CHEMICAL ABSTRACTS, vol. 100, no. 22, May 1984, page 270, abstract no. 179258y, Columbus, Ohio, US; & JP-A-58 211 860
- CHEMICAL ABSTRACTS, vol. 90, no. 4, January 1979, page 289, abstract no. 28051z, Columbus, Ohio, US; P.A. RENARD et al.: "An innovative bond system extends the utility of CBN (cubic boron nitride) abrasive", & IND. DIAMOND REV. 1978, (May), 163-5

## Description

This invention relates to abrasive materials and in particular to an abrasive element comprising an abrasive material having improved anti-loading properties.

It is a well-known problem when abrading soft materials, especially painted surfaces, that the abrasive material becomes clogged with debris from the abraded surface. Harder materials abrade in the form of dust or easily removed discrete particles but softer materials can melt under the conditions of high temperature and pressure generated by the abrasion process to form a discontinuous coating on the abrasive surface. As the coating builds up, the abrasive material rapidly becomes unusable. This phenomenon is known as "loading" and is a particular problem when cellulose-based paints are involved, especially nitrocellulose paints which are commonly used on car bodies.

Various lubricants and surface treatments have been applied to abrasive materials in order to minimise loading problems, for example, as disclosed in U.S. Patent Nos. 2050992, 2278158, 2780534, 2882064, 3043673, 3089763 and 3795496. The most commonly used lubricants are the metal salts of long chain fatty acids as disclosed in U.S. Patent Nos. 2768886 and 2893854. The fatty acid metal salts are generally applied in combination with a binder and optional coating additives such as wetting agents, thickeners, defoamers etc., as a dispersion in either aqueous or organic media. Current preference is directed to aqueous formulations, for example, as disclosed in Japanese Patent Application No. 56-69074.

U.S. patent No. 3,042,508 discloses metal backed abraders formed by brazing tungsten carbide abrasive particles to a steel substrate with copper brazing metal. The abrasive surface is coated with a sintered layer of a polymer selected from polytetrafluoroethylene, polytrifluorochloroethylene and co-polymers thereof, cured to a hard durable coating by heat treatment, typically in excess of 250°F (121°C). The abraders are said to resist loading during use.

U.S. Patent Nos. 3,779,727 and 3,868,232 disclose the use of poly(tetrafluoroethylene), poly(tetrafluoro ethylene-hexafluoropropylene) and fluorinated graphite as a solid lubricant for addition (in particulate form) to the binder matrix of grinding wheels and the size layer of abrasive belts and discs.

U.S. Patent No. 3,868,233 discloses the use of poly(tetrafluoroethylene) as a solid lubricant for addition to the central core of cup-type grinding wheels.

U.S. Patent No. 3,869,834 discloses the use of a surface deposit of Poly(tetrafluoroethylene) or poly(trifluorochloroethylene) particles, either loosely or compactly applied, onto the cutting surface of abrasive belts and grinding wheels.

U.S. Patent No. 4,343,628 discloses the use of Poly(tetrafluoroethylene) or a copolymer of Poly(tetrafluoroethylene-hexafluoropropylene) as a binder matrix for diamond containing grinding wheels.

U.S. Patent No. 4,720,941 discloses the use of Poly(tetrafluoroethylene) or poly(trifluorochloroethylene) as a binder matrix for abrasive elements such as grinding wheels and cups, abrasive discs, sheets and pads.

Japanese Patent No. 71-032912 discloses the addition of pulverised fluorinated resins such as poly(tetrafluoro ethylene) or a copolymer of Poly(tetrafluoroethylene-hexafluoroethylene) to the size or supersize layer of abrasive cloths and paper.

There has now been found an abrasive material having improved anti-loading properties.

According to the present invention there is provided an abrasive element comprising a substrate having on a surface thereof particles of an abrasive material secured by a non-metallic binding medium characterised in that at least the outermost surface of the element between the particles of abrasive material contains a fluorochemical selected from compounds comprising a fluorinated aliphatic group attached to a polar group or moiety and fluoropolymers having a molecular weight of at least 750 and comprising a non-fluorinated polymeric backbone having a plurality of pendant fluorinated aliphatic groups, which aliphatic groups comprise the higher of
(a) a minimum of three C-F bonds, or
(b) in which 25% of the C-H bonds have been replaced by C-F bonds such that the fluorochemical comprises at least 15% by weight of fluorine.

According to the present invention there is also provided a method of preparing such an abrasive element as defined in independent claim 10.

Abrasive products are normally prepared by coating one surface of a substrate with a first binder layer having adhesive properties, often referred to in the art as the "make". Particles of abrasive material are applied to the coated substrate and partially embedded therein. A layer of a second binder, often referred to as the "size", is then applied to the material. The thickness of the second binder layer regulates the amount of the abrasive material extending above the binder medium. Anti-loading materials have generally been included in a further optional layer, referred to in the art as the "supersize".

The abrasive elements of the invention may comprise an inorganic, non-metallic binding medium, e.g., a silicate or ceramic based system, but more preferably comprise an organic, non-metallic binding medium.

The presence of a fluorochemical in at least the layer forming the exposed surface of the element is found to confer anti-loading properties upon the material so treated.

The fluorochemical may be applied as a layer coated over the existing layers of an abrasive element or may be incorporated into at least the composition which will form the outer layer. Thus, the fluorochemical may be incorporated into the make of an abrasive element consisting of a single layer; the fluorochemical may be incorporated into the size of an abrasive element consisting of a make and size layers or the fluorochemical may be incorporated into the supersize layer of an abrasive element consisting of a make, size and supersize layers. If more than one supersize layer is present the fluorochemical is incorporated into the outermost supersize layer. The fluorochemical is preferably present in a supersize layer.

The anti-loading materials used in the present invention are suitable for application to a wide variety of abrasive materials or products, serving to reduce the loading of the abrading surface in use and thereby extending the working life of the material. The abrasive elements may be in the form of sheets, blocks, discs, pads, belts and the like or rigid or flexible three-dimensional arrays of fibres, e.g., of the type commercially available from Minnesota Mining and Manufacturing Company under the Trade Mark SCOTCH-BRITE. Abrasive elements of the invention may be advantageously used under either dry or wet abrading conditions since the fluorochemical provides a degree of water repellancy.

The term "fluorochemical" used herein embraces both fluoropolymers and other non-polymeric fluorinated materials. The latter generally comprise lower molecular weight fluorinated compounds and contain at least 15% (preferably 20%) by weight of fluorine, and are substantially involatile under atmospheric pressure at temperatures up to 50°C, preferably up to 100°C, most preferably up to 150°C. Such materials commonly comprise a fluorinated aliphatic group attached to a polar group or moiety such as carboxylic acid (and salts thereof), phosphoric acid (and salts thereof), sulphonic acid (and salts thereof), acid halide, sulphonyl halide, ether, ester, amide, sulphonamide, polyether, urethane, carbonate, urea, carbamate etc. Examples of such materials include FC-10, FC-26, FC-95, FC-128, FC-393, FC-805 and FC-807, commercially available from Minnesota Mining and Manufacturing Company.

The term "fluoropolymer" used herein covers a wide range of polymeric and oligomeric materials having a molecular weight of at least 750, preferably at least 1000, which materials comprise a polymeric or oligomeric backbone having a plurality of pendant fluoroaliphatic groups. The polymeric backbone may comprise any suitable homopolymer or co-polymer known to the art including, for example, acrylates, urethanes, polyesters and polycarbodiimides. Co-polymers of fluorinated and non-fluorinated monomers are also useful. Usually, the fluoropolymer has a minimum fluorine content of 15%, preferably 20% by weight.

Generally, where the backbone comprises hetero-atoms (e.g., oxygen, nitrogen, sulphur etc.) in addition to carbon atoms, then fluorine may be present as a backbone substituent. Where the backbone comprises solely carbon atoms, then the fluorine substituents are usually confined to the pendant fluoroaliphatic groups, the backbone remaining fluorine free. Thus, fluorinated polyethers, polyesters, polyurethanes or other polymers formed by ring opening or condensation polymerisation are included, but the highly insoluble polymers and copolymers of tetrafluoroethylene, hexafluoropropylene, chlorotrifluoroethylene, vinyl fluoride, vinylidene fluoride etc. are excluded.

The fluoropolymer preferably comprises an acrylate homopolymer or co-polymer backbone supporting a number of fluoroaliphatic groups. The term acrylate is used in the generic sense and is intended to include not only derivatives of acrylic acid but also methacrylic acid and other modified acrylic acids.

Each acrylate monomer may possess one or more fluoroaliphatic groups in which the higher of (a) a minimum of three C-F bonds are present or (b) 25% of the C-H bonds have been replaced by C-F bonds. Each acrylate monomer incorporates at least one polymerisable vinyl group.

Typical polymers for use in the invention are derived from acrylate monomers of general formula (I): 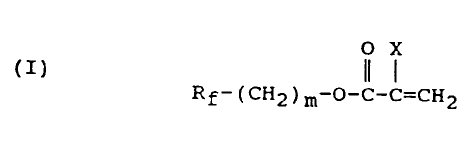
in which;
R_{f} represents a fluoroaliphatic group,
x represents H or an alkyl group of from 1 to 5 carbon atoms, preferably CH₃, and,
m is 0, 1 or 2.

The fluoroaliphatic group R_{f} is generally a fluorinated, preferably saturated, monovalent, aliphatic group of at least two carbon atoms. The chain may be straight, branched, or, if sufficiently large, cyclic, and may be interrupted by oxygen atoms or nitrogen atoms bonded only to carbon atoms. A fully fluorinated group is preferred, but hydrogen or chlorine atoms may be present as substituents in the fluorinated aliphatic group; generally not more than one atom of either is present in the group for every two carbon atoms. Preferably the group contains a terminal perfluoromethyl group. Preferably, the fluorinated aliphatic group contains no more than 20 carbon atoms.

Specific examples of such compounds include:
1,1-dihydroperfluoro-octyl acrylate,
1,1-dihydroperfluoro-octyl methacrylate,
1,1-dihydroperfluoro-butyl acrylate,
1H,1H,5H-octafluoro-pentyl acrylate,
1H,1H,11H-eicosafluoro-undecyl acrylate,
Hexafluoro-isopropyl acrylate,
Perfluoropentyl acrylate.

The acrylates may also possess other atoms, e.g., sulphur and nitrogen, outside the fluoroaliphatic group. For example, fluoropolymers comprising monomers of general formula (II) may be employed: 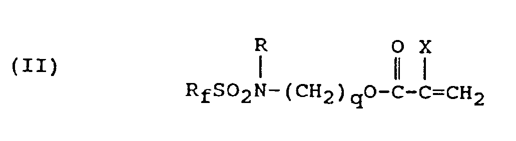
in which;
X is as defined above,
R_{f} represents a fluoroaliphatic group as above,
R represents hydrogen or an alkyl group, generally of 1 to 5 carbon atoms, and
q is an integer from 1 to 11.

Specific examples of such compounds include:
2-(N-ethyl perfluoro octane sulphonamido)ethyl acrylate,
2-(N-ethyl perfluoro octane sulphonamido) ethyl acrylate,
2-(N-butyl perfluoro octane sulphonamido)ethyl acrylate.

Mixtures of two or more fluorinated acrylates may also be employed.

A preferred class of fluoropolymers are derived from perfluoro-octylsulphonamidoethyl acrylate monomers, for example, fluoropolymers commercially available under the trade designations FC-461 and FC-824 from the Minnesota Mining and Manufacturing Company.

The amount of fluorochemical applied to the abrasive element varies with the fluorochemical selected, the layer of incorporation and the grade of abrasive mineral to be treated. Normally, the fluorochemical is applied in an aqueous dispersion. The dry coating weight varies with the grade of abrasive and the formulation in which it is applied, and is generally in the range 5mg/m² to 300g/m². Generally the coarser the grade of abrasive, the greater the amount of fluorochemical included. The depth of coating employed depends upon whether the fluorochemical is in the size or supersize and what other layers are present.

In one embodiment the fluorochemical may be added to a supersize coating formulation. The supersize coating generally comprises an aqueous dispersion or solution of a binder material and the fluorochemical. Both binder and fluorochemical are normally formulated as an aqueous dispersion or emulsion, typically a 15 to 80% by solids aqueous dispersion or emulsion.

Supersize coatings are generally formulated according to the following amounts, in which;
(a) the binder generally comprises at least 0.5%, more preferably 1 to 80%, of the total solids of the composition, and,
(b) the fluorochemical generally comprises at least 0.05%, more preferably 0.2 to 80%, of the total solids of the composition.

The supersize binder material may comprise any water-soluble or water-dispersable binder known to the art. Suitable binders include methyl cellulose, sodium carboxymethyl cellulose and more preferably an acrylic homopolymer or co-polymer latex. In a most preferred embodiment, the supersize binder comprises a styrene-acrylate co-polymer latex, commercially available from Vinyl Products Limited, under the trade designation VINACRYL 71322.

In an alternative embodiment the fluorochemical may be included within the size layer, thereby dispensing with the need for a supersize layer. Size coatings generally comprise an aqueous dispersion or solution of binder material and the fluorochemical. Size coatings are generally formulated according to the following amounts, in which:
(a) the binder comprises at least 20%, typically 35 to 99% of the total solids of the composition, and,
(b) the fluorochemical comprises at least 0.05%, typically 0.2 to 5% of the total solids of the composition.

The size binder may comprise any water-soluble or water-dispersable binder known to the art. Suitable binders include formaldehyde based resins, such as amine formaldehydes, (e.g. melamine formaldehyde and urea formaldehyde), phenol formaldehyde, epoxy resins and blends thereof.

The size and supersize coatings of the invention are fully compatible with conventional anti-loading additives and advantageously may include one or more additives known to the art. A preferred additive comprises the salt of a fatty acid. The fatty acid salt is normally only added to the supersize coating and generally comprises from 40 to 99%, preferably 50 to 98% by weight of the total solids of the composition.

The fatty acid salt may comprise any fatty acid salt known to the art of anti-loading materials but is preferably a fatty acid salt of general formula (III): 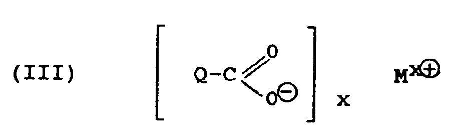
in which;
Q is a saturated or unsaturated hydrocarbon group having a chain length of from 9 to 30 skeletal carbon atoms, more preferably from 9 to 24 carbon atoms and most preferably from 11 to 17 carbon atoms,
X has integral values from 1 to 4, and,
M is a metal or ammonium cation.
Q preferably represents an alkyl chain selected from:-
(i) CₙH₂ₙ₊₁ to complete a fatty acid salt derived from an alkanoic acid;
(ii) CₙH₂ₙ₋₁ to complete a fatty acid salt derived from an alkenoic acid;
(iii) CₙH₂ₙ₋₃ to complete a fatty acid salt derived from an alkadienoic acid, and,
(iv) CₙH₂ₙ₋₅ to complete a fatty acid salt derived from an alkatrienoic acid, in which n has integral values from 9 to 30, more preferably 9 to 24 and most preferably 11 to 17.

M is preferably selected from Al, Zn, Mg, Ca, Ba, Na Li, Zr, Pb and NH₄.

The fatty acid salt may comprise a mixture of one or more salts. Preferred fatty acid salts comprise calcium laurate (calcium dodecanoate), calcium myristate (calcium tetradecanoate), calcium palmitate (calcium hexadecanoate), calcium stearate (calcium octadecanoate), calcium oleate (calcium octadecenoate) and mixtures thereof.

In a most preferred embodiment the salt comprises calcium stearate, commercially available as a 50% solids aqueous dispersion under the trade designation Nopco 1097A and Nopco 10975 from Henkel Nopco.

The supersize or size coating formulations of the invention may also include one or more additives known in the art, such as fillers, other stearates, thickeners, anti-static agents, defoamers, wetting agents and auxiliary pigments such as talc, TiO₂ and carbon black. Additives such as metal flakes, carbon black and graphite are particularly useful as they confer an anti-static effect on the abrasive material.

The fluorochemical containing layer may be coated using conventional methods known to the art, such as spraying or roller coating.

The coating procedure generally comprises the sequential coating of
(1) the make, followed by the abrasive material,
(2) the size and optionally
(3) one or more supersizes.

Each layer is successively coated after drying of the previous layer. Drying of the fluorochemical containing layer is advantageously completed by heating. The drying temperature varies with the selected fluorochemical and the presence of additional binders. Generally, drying is completed by heating at elevated temperatures, e.g., 100°C, for a period of from 1 to 20 minutes or alternatively in a tunnel dryer heating for 1 to 60 seconds at higher temperatures, e.g., 120°C.

In addition to the anti-loading effect, the coated layers incorporating a fluorochemical provide an additional benefit when applied to abrasive sheets having an adhesive layer coated on to the back of the support. When such materials are formed in a continuous roll, there is a tendency for "blocking" (sticking together) and "pick up" (transfer of the outer layer of one sheet to the adhesive coating of another). Both of these effects are minimised by the present invention.

Furthermore, the presence of the fluorochemical is found to impart a degree of water and oil repellency to the abrasive element and may allow the element to be used for wet abrading.

Anti-loading layers including a fluorochemical in accordance with the invention may be used with a wide variety of abrasive products. The abrasive may be any of the commonly used materials and of any grade (although the problem of loading is most severe with fine grades).

The invention will now be described with reference to the following Examples.

Anti-loading compositions of the invention were coated onto the following abrasive materials:
Base Material A comprising aluminium oxide abrasive mineral particles bound to a paper backing with a urea formaldehyde resin,
Base Material B comprising aluminium oxide abrasive mineral particles bound to a polyester film backing with a phenol formaldehyde resin,
3M 245 abrasive base, commercially available from Minnesota Mining and Manufacturing Company, and,
3M 314 abrasive base, commercially available from Minnesota Mining and Manufacturing Company.

After coating the base material was cut into abrasive discs in a conventional manner.

Other materials utilised in the Examples are:

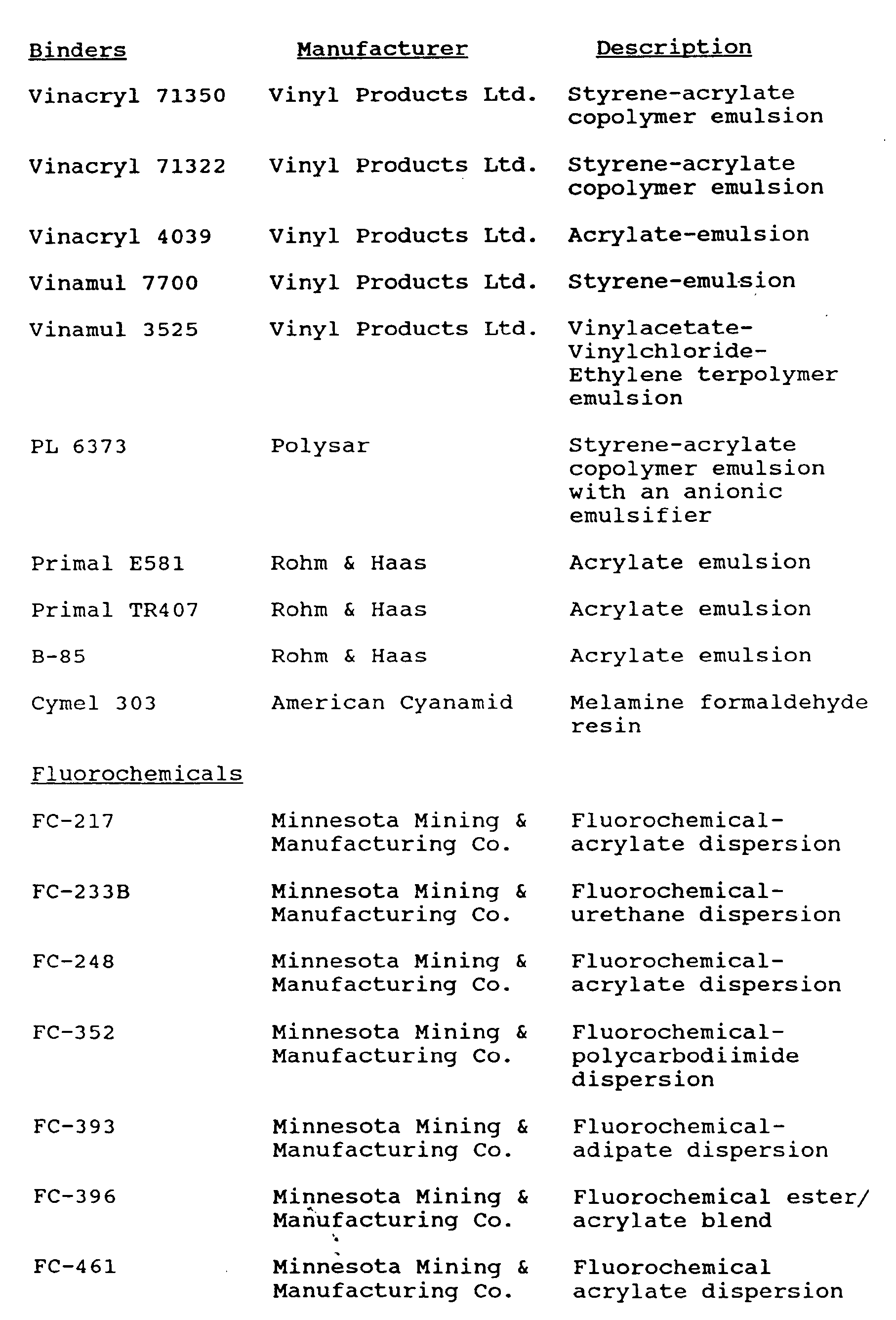

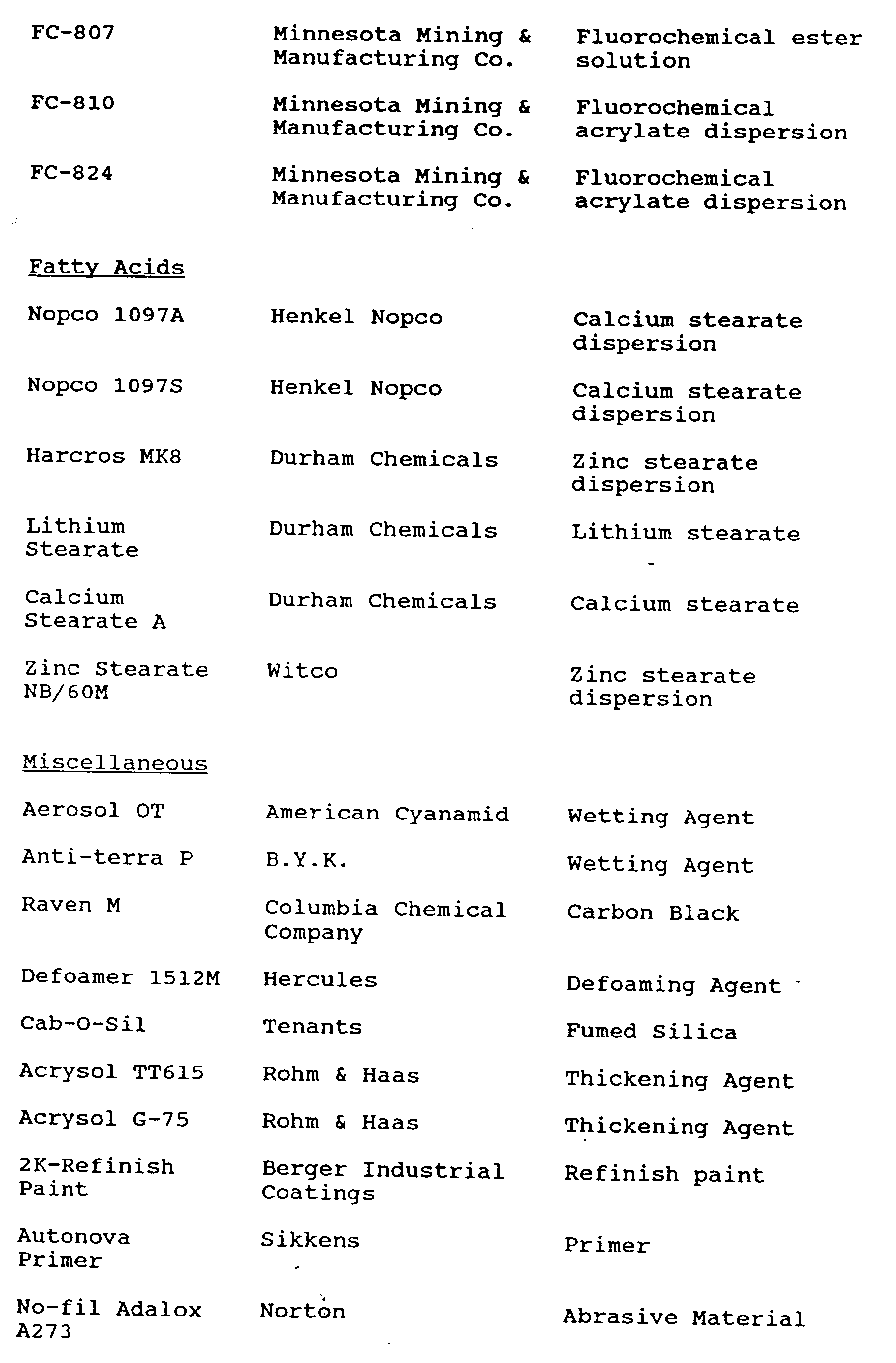

### EXAMPLE 1

In this Example, abrasive discs of Base Material A (Grade P320) having a coating composition according to the invention were compared with 3M 212 discs (Grade P320) identical to Base Material A but coated with a proprietary stearate-based anti-loading composition. The 3M 212 discs are commercially available from the Minnesota Mining and Manufacturing Company under the trade name 'PRODUCTION FRECUT'.

Abrasive discs of the invention were coated in a conventional manner on a laboratory roller coater with the following coating formulation at about 10g/m² dry coating weight.

### Formulation 1

(i) Vinacryl 71322 5.0 parts by weight
(ii) Nopco 1097A 25.0 parts by weight
(iii) FC-396 0.25 parts by weight

The performance of the coated discs was evaluated by abrading a test panel of mild steel primed and painted with a cellulose-based paint in a conventional manner. Separate 24 square inches portions were sanded by discs of both types under identical conditions.

The control disc started to load up after only 7 seconds and did not cut through the top coat to the primer. The control disc was completely clogged with paint after 40 seconds and had stopped cutting.

The disc coated with Formulation 1 of the invention sanded the entire 24 square inches removing all of the top coat in 1 minute 10 seconds, without clogging.

In a further test a panel of mild steel was primed with AUTONOVA PRIMER and test areas sanded for 3 minutes using a Desoutter D/A Sander equipped with the control disc and disc of the invention. The performance of each disc is detailed in the Table below:

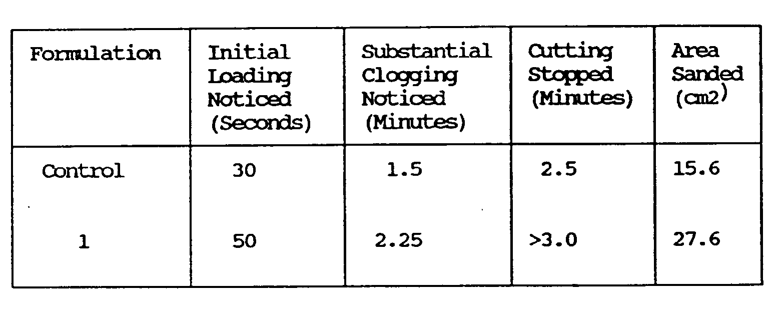

### EXAMPLE 2

This Example illustrates the improvement in anti-loading properties conferred by treatment of an abrasive material with a fluorochemical-containing coating formulation according to the invention.

The following coating formulations were prepared:-
Formulation 2: PL6373 (5g), FC-824 (5g), Cab-O-Sil (1g), Calcium Stearate A (10g) and 2 drops each of Aerosol OT and Defoamer 1512M were added to 40g of water.
Control Formulation: as per Formulation 2 but with no fluorochemical and PL6373 (10g).

Each formulation was hand coated onto Base Material A (Grade P240) abrasive discs and dried for ten minutes at 50°C. The performance of the coated discs was evaluated by abrading a test panel representative of a Rover car body panel for 1 minute in a similar manner to Example 1. Discs coated with Formulation 2 removed an area of paint 20% in excess of that removed by the discs coated with the Control Formulation and were visibly less loaded following testing.

### EXAMPLE 3

The following coating formulations were prepared:-
Formulation 3: Primal TR407 (25g), FC-824 (25g) and Calcium Stearate A (10g) in water (10g).
Control Formulation: Primal TR407 (50g), Calcium Stearate A (10g) and Cab-O-Sil (1g).

Each formulation was hand coated onto Base Material A (Grade P240) abrasive discs and dried for ten minutes at 50°C. The performance of the coated discs was evaluated as in Example 2.

Discs coated with Formulation 3 removed at least three times the area of paint removed by discs coated with the Control Formulation and were visibly less loaded following testing.

### EXAMPLE 4

The following coating formulations were prepared:-

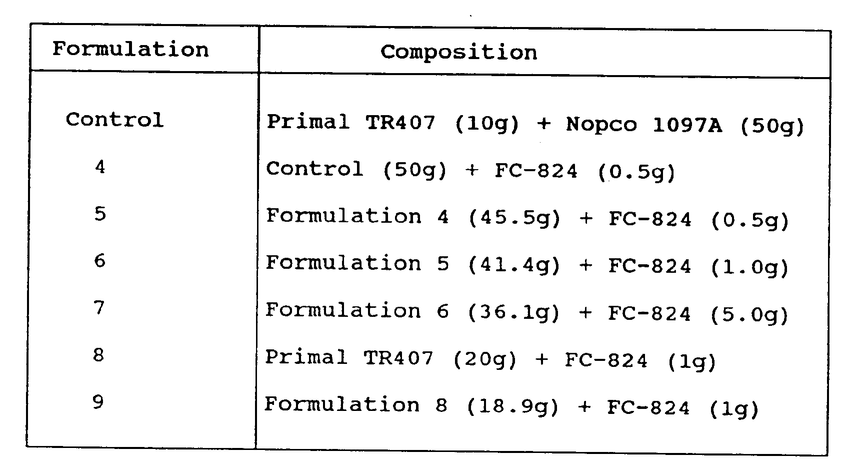

Each formulation was hand coated onto Base Material A (Grade P240) abrasive discs and dried for 1 minute at 100°C. The performance of each disc was evaluated by flat sanding (whole area of disc in contact with panel) and edge sanding (perimeter of disc in contact with panel) a mild steel test panel coated with a cellulose-based paint for 5 seconds using a Desoutter D/A Sander. Visual inspection of the discs both during and after testing revealed that discs coated with the Control Formulation loaded more rapidly and were inferior to discs coated with Formulations 4 to 9, incorporating FC-824. Discs coated with Formulations 8 and 9 accumulated large agglomerates of cellulose paint which were shed as the test proceeded. Discs coated with Formulations 4 to 7 remained substantially free from debris throughout the test.

### EXAMPLE 5

The following coating formulations were prepared:-

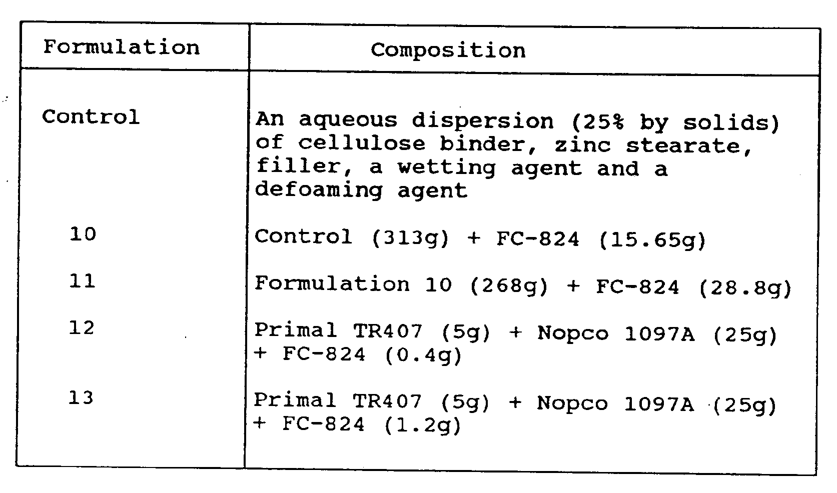

Each formulation was hand coated onto Base Material A (Grade P240) abrasive discs and dried for 3 minutes at 100°C. The performance of each disc was evaluated by abrading a mild steel test panel coated with a cellulose-based paint. The results are presented in the Table below.

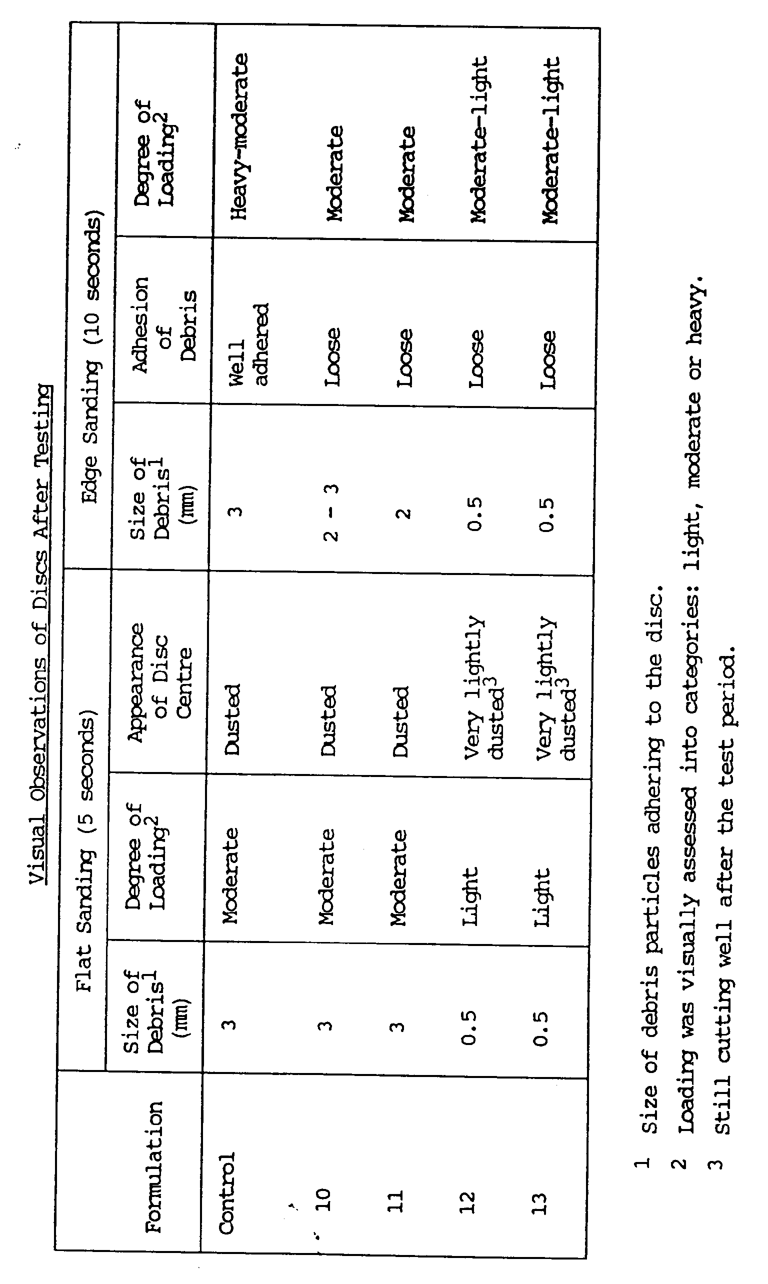

### EXAMPLE 6

This Example compares the Control disc of Example 1 Grade P240) with an abrasive disc of Base Material A (Grade P240) coated with Formulation 13 of Example 5. The performance of both types of coated disc was evaluated by sanding a mild steel test panel coated with 2K-refinish paint. The panel was sub-divided into two sections with masking tape and each side sequentially blanked with paper whilst the other half was abraded with the coated disc under evaluation. A visual inspection of the discs revealed that the disc coated with Formulation 13 exhibited superior anti-loading properties when compared with the Control disc. The abraded panel was sprayed with 2K-refinish paint with no visual defects in the surface coating.

A further test was conducted by abrading areas of a test panel coated with a cellulose-based paint (spray coated 3 hours prior to sanding), and a visual inspection of the discs revealed the disc coated with Formulation 13 exhibited superior anti-loading Properties when compared to the Control.

### EXAMPLE 7

The following coating formulations were prepared:-
Control A: the Control disc of Example 1 (Grade P240).
Formulations 14 to 22: as detailed in the Table below, in which:
A = Urea formaldehyde resin (UF)
B = UF hardener (aqueous ammonium chloride/ammonia)
C = Vinacryl 71322
D = B-85
E = Nopco 1097A
F = FC-824
G = FC-807
H = FC-248

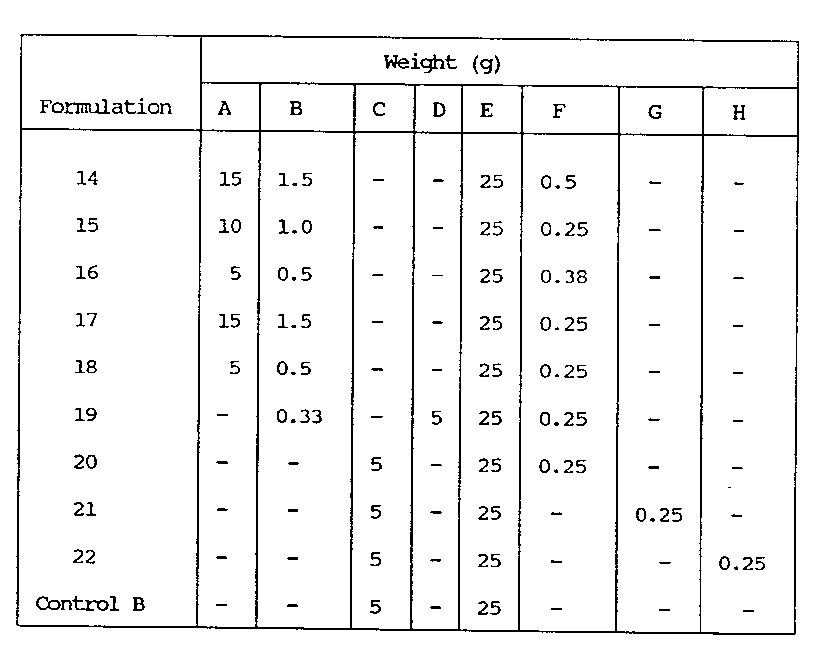

Each formulation was hand coated onto Base Material A (Grade P240) abrasive discs and dried for 10 minutes at 110°C. The performance of each disc was evaluated by abrading a test panel coated with a cellulose-based paint as described in Example 1.

A visual inspection of the discs after testing revealed that discs coated with Formulations 14 to 22 exhibited a superior anti-loading performance compared to Control A. Discs coated with Formulations 14 to 19 containing an amine-formaldehyde resin binder loaded more readily than discs coated with Formulations 20 to 22 containing an acrylate-based binder. Of the acrylate-binder containing dispersions, Formulation 20 containing FC-824 was shown to provide the greatest resistance to loading. Discs coated with Formulations 20 to 22 were superior to discs coated with Control B which contained the acrylate binder but no fluorinated polymer.

### EXAMPLE 8

The following coating formulations were prepared:
Control: the Control disc of Example 1 (Grade P320).

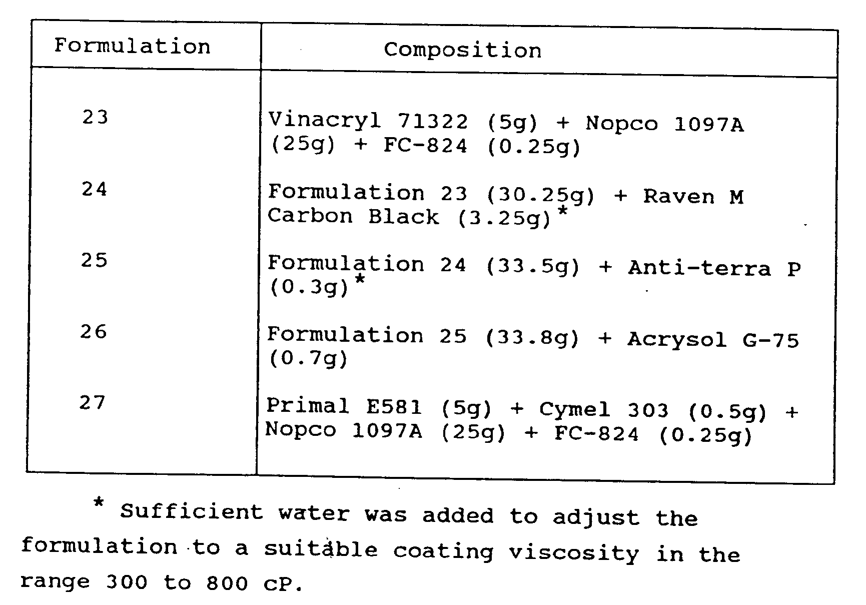

Each formulation was hand coated onto Base Material A (Grade P320) abrasive discs and dried for 5 minutes at 110°C. The performance of each disc was evaluated by abrading a test panel coated with a cellulose-based paint as described in Example 1.

A visual inspection of the discs after testing revealed that discs coated with Formulations 23 to 27 were visibly superior to the Control.

### EXAMPLE 9

The following coating formulations were prepared:-
Control: as per the Control disc of Example 1 (Grade P320), but comprising Base Material B abrasive substrate.

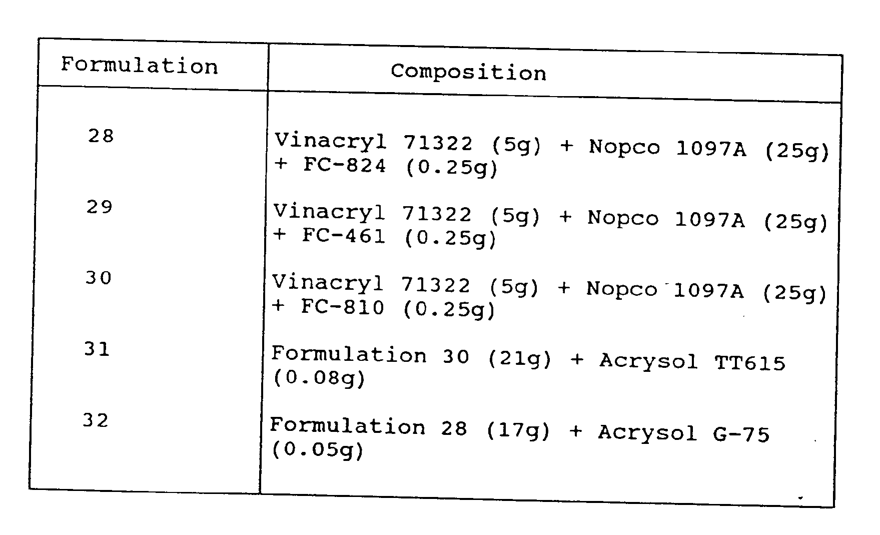

Each formulation was laboratory roller coated onto Base Material B (Grade P320) abrasive discs and dried for 5 minutes at 110°C. The performance of each coated disc was evaluated by sanding on the following substrates:
(i) a mild steel panel coated with a cellulose-based paint;
(ii) an oak panel;
(iii) a panel representative of a Rover car body panel, and,
(iv) a panel representative of a Fiat car body panel.

A visual inspection of the discs after testing revealed that discs coated with Formulations 28 to 32 exhibited superior anti-loading properties to the Control.

### EXAMPLE 10

The following coating formulations were prepared:-
Control: the Control disc of Example 1 (Grade P320).

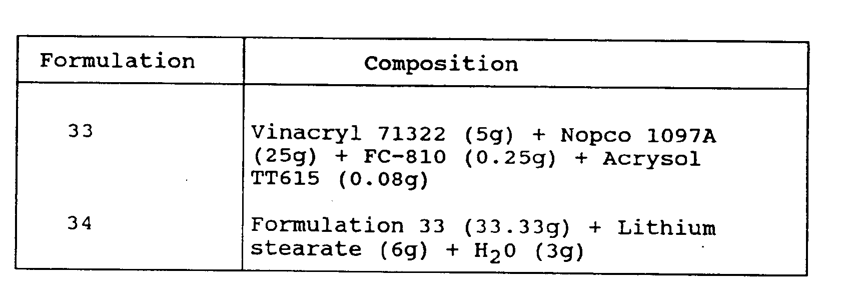

Each formulation was coated onto:
(a) Base Material A (Grade P320) abrasive discs, and,
(b) 3M 314 (Grade P400) abrasive discs.

The performance of each disc was evaluated by testing on the following substrates:
(i) a panel representative of a Rover car body panel;
(ii) a panel representative of a Fiat car body panel;
(iii) a mild steel panel coated with a cellulose-based paint.

A visual inspection of the discs after testing revealed that discs coated with Formulations 33 and 34 exhibited a superior anti-loading performance compared to the Control. Discs coated with Formulation 34 were less susceptible to loading than discs coated with Formulation 33.

### EXAMPLE 11

The following coating formulations were prepared:-

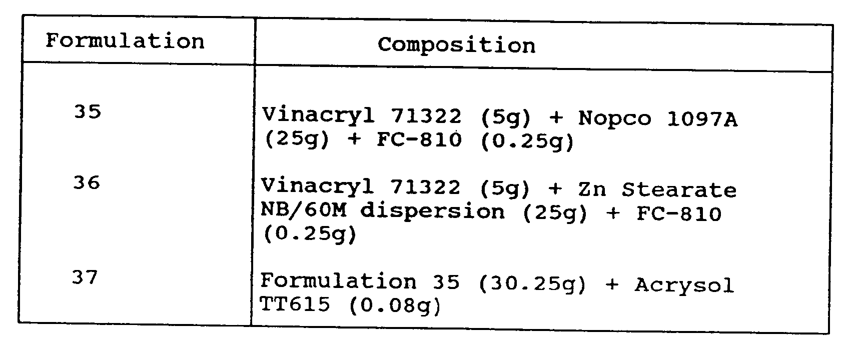

Control: the Control disc of Example 1 (Grade P320).

Each Formulation was coated onto Base Material A (Grade P320) abrasive discs. The performance of each disc was evaluated by testing on:
(i) a mild steel panel coated with a cellulose-based paint, and,
(ii) a mild steel panel coated with 2K-refinish paint.

A visual inspection of the discs after the testing revealed that discs coated with Formulations 35 to 37 exhibited a superior anti-loading performance to the Control.

### EXAMPLE 12

The following coating formulations were prepared:-
Control: the Control disc of Example 1 (Grade P320).

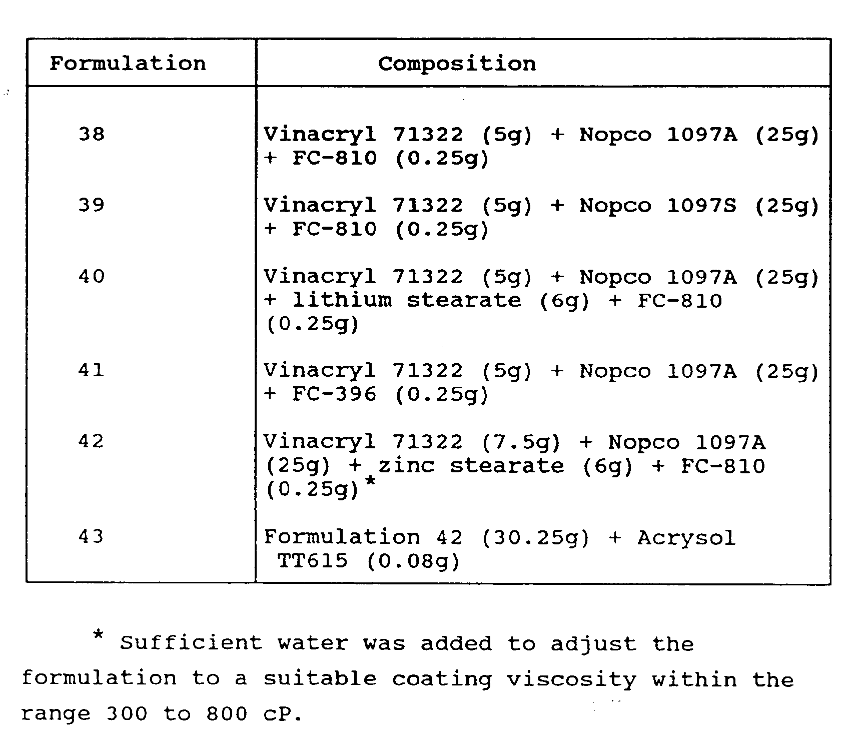

Each formulation was hand coated onto Base Material A (Grade P320) abrasive discs and dried for 5 minutes at 110°C. The performance of each disc was evaluated by testing on:
(1) a mild steel panel coated with a cellulose-based paint,
(ii) a panel representative of a Rover car body, and,
(iii) an oak panel.

A visual inspection of the discs after testing revealed that discs coated with Formulations 38 to 43 exhibited a superior anti-loading performance compared to the Control.

### EXAMPLE 13

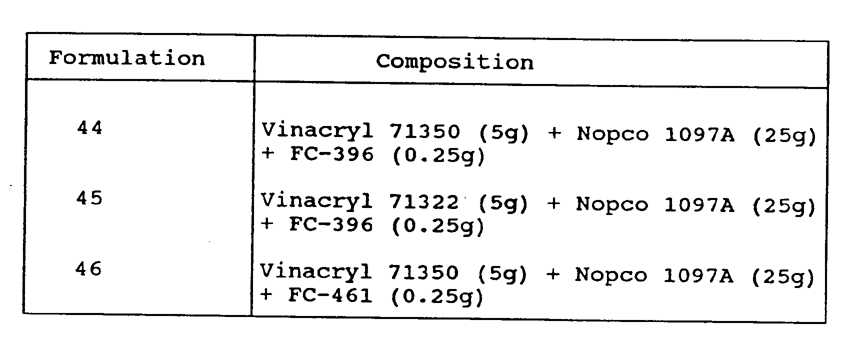

Control Formulation: the Control disc of Example 1 (Grade P320).

Each Formulation was hand coated onto Base Material A (Grade P320) abrasive discs and dried for 2½ minutes at 110°C. Formulation 46 was additionally coated onto 3M 245 (Grade P40) abrasive discs.

The performance of each of the Grade P320 discs was evaluated by abrading the following substrates:
(i) a mild steel panel coated with a cellulose-based paint, and,
(ii) a panel representative of a Rover car body panel.

The coated 3M 245 abrasive disc was tested on a glass fibre panel having a gel coating of hardened polyester resin and compared with a control disc comprising an untreated 3M 245 abrasive disc.

A visual inspection of the discs after testing revealed that discs coated with Formulations 44 to 46 exhibited superior anti-loading properties compared to the Control. The 3M 245 abrasive disc coated with Formulation 46 produced superior anti-loading properties compared with the untreated disc.

### EXAMPLE 14

This Example serves to illustrate the wide range of fluorochemicals which may be incorporated in anti-loading compositions of the invention.

A premix was made up comprising; Vinacryl 71322 (55g), Nopco 1097A (275g).
Formulation 47
To 30g of premix was added 0.25g of FC-217 (cationic-dispersion).
Formulation 48
To 30g of premix was added 0.25g of FC-217 (anionic-dispersion).
Formulation 49
To 30g of premix was added 0.25g of FC-233B (cationic-dispersion).
Formulation 50
To 30g of premix was added 0.3g of FC-233B (anionic-dispersion).
Formulation 51
To 30g of premix was added 0.25g of FC-352 (cationic-dispersion).
Formulation 52
To 30g of premix was added 0.25g of FC-352 (anionic-dispersion).
Formulation 53
To 30g of premix was added 0.25g of FC-393 (cationic-dispersion).
Formulation 54
To 30g of premix was added 0.25g of FC-396.

Each Formulation was hand coated onto Base Material A (Grade P400) abrasive discs and dried for 2 minutes at 110°C. A control disc was coated with premix having no fluorochemical additive and dried as above. The performance of each coated disc was evaluated by abrading:
(i) a mild steel panel coated with a cellulose-based paint, and,
(ii) a panel representative of a Rover car body panel

A visual inspection of the discs after testing revealed that discs coated with Formulations 47 to 54 exhibited superior anti-loading properties compared to the control disc coated with the premix alone.

### EXAMPLE 15

The abrasive disc coated with Formulation 54 from Example 14 was mounted on an air-powered disc sander. The performance of the coating was evaluated by abrading a paint coated test panel, wetted with water both before and during cutting. The coated disc performed well, cutting an area approximately twice that of a control comprising the Control disc of Example 1 (Grade P400).

### EXAMPLE 16

This Example demonstrates the application of anti-loading compositions of the invention to the size layer of an abrasive material.

The following mixes were coated onto an abrasive material comprising aluminium oxide abrasive mineral particles bonded to a paper substrate with urea formaldehyde resin.
Control Mix: Phenol formaldehyde resin (48g) + water (30g).
Size Mix 1: Control (58.8g) + FC-396 (0.02g).
Size Mix 2: Mix 1 (48g) + FC-396 (0.09g).
Size Mix 3: Mix 2 (39.7g) + FC-396 (0.26g).

The coated materials were cured at 105°C for 2½ hours. At this point abrasive materials coated with Size Mixes 2 and 3 did not wet following testing with a SCOTCHGARD Wettability Test Kit 3W, commercially available from Minnesota Mining and Manufacturing Company. SCOTCHGARD is a Registered trade name. Samples of each coated material were affixed to rubber sanding blocks and the performance of each material evaluated by hand sanding a mild steel test panel coated with a nitrocellulose-based paint. Abrasive materials coated with Mixes 2 and 3 exhibited superior anti-loading properties compared to the abrasive material coated with the Control Mix and Mix 1.

### EXAMPLE 17

This Example demonstrates the improvement in anti-loading properties conferred by treating No-fil Adalox A273 abrasive discs, commercially available from Norton Chemical Co., with a fluorochemical-containing coating formulation in accordance with the invention.

The super-size layer containing a conventional metal stearate lubricant was removed from Norton No-fil Adalox A273 abrasive discs (180-A and 320-A). Each abrasive disc was then coated with a mix of Formulation 1 as described in Example 1 and the coated disc dried for 10 minutes at 110°C. Control discs of Norton A273 were similarly heated for 10 minutes at 110°C. The performance of both the treated discs and the control discs was evaluated by abrading a mild steel test panel coated with a cellulose-based paint as described in Example 1. The results are presented in the Tables below.
(a) 180-A No-fil Adalox A273 6 hole disc with loop attachment used on ORKA ROA1 D/E with a 3M 5876 back up pad. 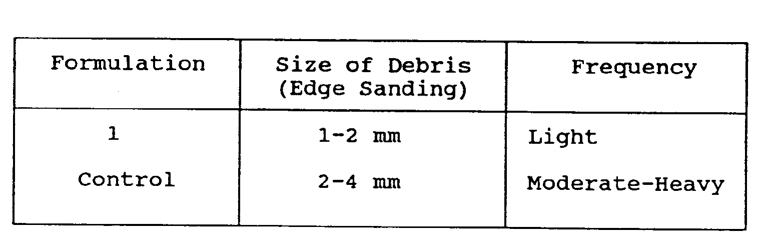
(b) 320-A No-fil Adalox A273 Plain disc with PSA attachment used on Airwal Model TA 150 with 3M 5576 back up pad.

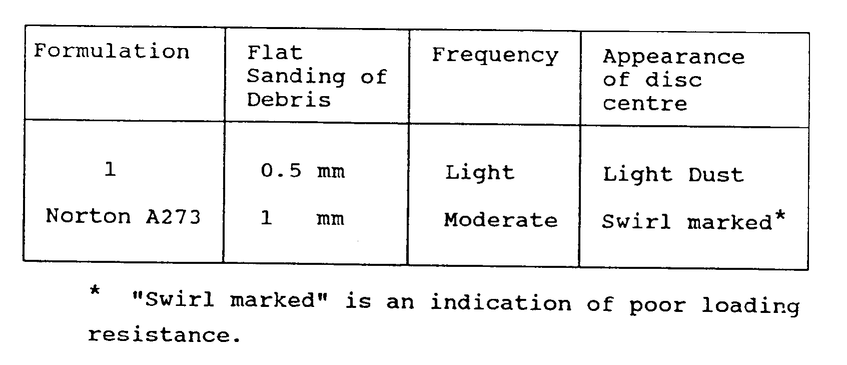

## Claims

1. An abrasive element comprising a substrate having on a surface thereof particles of an abrasive material secured by a non-metallic binding medium characterised in that at least the outermost surface of the element between the particles of abrasive material contains a fluorochemical selected from compounds comprising a fluorinated aliphatic group attached to a polar group or moiety and fluoropolymers having a molecular weight of at least 750 and comprising a non-fluorinated polymeric backbone having a plurality of pendant fluorinated aliphatic groups, said aliphatic groups comprising the higher of
(a) a minimum of three C-F bonds, or
(b) in which 25% of the C-H bonds have been replaced by C-F bonds such that the fluorochemical comprises at least 15% by weight of fluorine.

2. An abrasive element as claimed in Claim 1 characterised in that the non-metallic binding medium comprises an organic binding medium.

3. An abrasive element as claimed in Claim 1 or Claim 2 characterised in that the binding medium comprises a first layer proximal to the substrate and a second layer distal to the substrate and wherein the fluorochemical is present in the second layer.

4. An abrasive element as claimed in Claim 3 characterised in that the second layer comprises:
(a) at least 20% binder by weight of the total solids of the composition, and,
(b) at least 0.05% fluorochemical by weight of the total solids of the composition.

5. An abrasive element as claimed in any preceding Claim characterised in that the fluoropolymer is selected from fluorinated acrylates and modified acrylates, fluorinated urethanes, fluorinated polyesters, fluorinated polycarbodiimides and copolymers thereof.

6. An abrasive element as claimed in any preceding Claim characterised in that the fluoropolymer comprises fluorinated acrylate monomers having a nucleus of general formula (I): 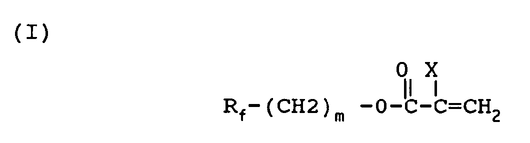 wherein;
R_{f} represents a fluoroaliphatic group,
X is selected from hydrogen and alkyl groups comprising up to 5 carbon atoms, and,
m is 0, 1 or 2.

7. An abrasive element as claimed in any one of Claims 1 to 5 characterised in that the fluoropolymer comprises fluorinated acrylate monomers having a nucleus of general formula (II): 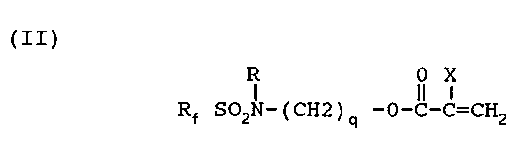 wherein;
X is selected from hydrogen and alkyl groups comprising up to 5 carbon atoms,
R_{f} represents a fluoroaliphatic group,
R represents an alkyl group, comprising up to 5 carbon atoms, and
q is an integer from 1 to 11.

8. An abrasive element as claimed in any preceding Claim characterised in that the binding medium additionally comprises from 40 to 99% of the total solids of the composition of a fatty acid salt.

9. An abrasive element as claimed in any preceding Claim characterised in that the binding medium additionally comprises an anti-static agent selected from carbon black graphite and metal flakes.

10. A method of preparing an abrasive element having a reduced propensity to loading, which method comprises providing a fluorochemical in the binder medium which constitutes the outermost surface of the element between the particles of abrasive material, wherein the fluorochemical is selected from compounds comprising a fluorinated aliphatic group attached to a polar group or moiety and fluoropolymers having a molecular weight of at least 750 and comprising a non-fluorinated polymeric backbone having a plurality of pendant fluorinated aliphatic groups, said aliphatic groups comprising the higher of
(a) a minimum of three C-F bonds, or
(b) in which 25% of the C-H bonds have been replaced by C-F bonds such that the fluorochemical comprises at least 15% by weight of fluorine.

## Patentansprüche

1. Schleifelement, umfassend ein Substrat, das auf einer Oberfläche Partikel eines Schleifmittels trägt, welche durch ein nicht-metallisches Bindemittel festgehalten sind, gekennzeichnet dadurch, daß wenigstens die äußerste Oberfläche des Elementes zwischen den Schleifmittelpartikeln eine Fluorchemikalie enthält, die ausgewählt wird aus Verbindungen, die einen fluorierten aliphatischen Rest, gebunden an einen polaren Rest oder eine polare Einheit umfassen, sowie Fluorpolymeren, die ein Molekulargewicht von mindestens 750 haben und eine nichtfluorierte polymere Hauptkette umfassen mit einer Mehrzahl fluorierter aliphatischer Seitenreste, wobei diese aliphatischen Reste, je nachdem, was größer ist, entweder
(a) ein Minimum von drei C-F-Bindungen umfassen, oder
(b) in ihnen 25 % der C-H-Bindungen durch C-F-Bindungen ersetzt sind, sodaß die Fluorchemikalie mindestens 15 Gew.-% Fluor umfaßt.

2. Schleifelement nach Anspruch 1, gekennzeichnet dadurch, daß das nicht-metallische Bindemittel ein organisches Bindemittel umfaßt.

3. Schleifelement nach Anspruch 1 oder 2, gekennzeichnet dadurch, daß das Bindemittel eine erste Schicht unmittelbar anschließend an das Substrat und eine zweite Schicht entfernt vom Substrat umfaßt, wobei die Fluorchemikalie in der zweiten Schicht vorliegt.

4. Ein Schleifelernent nach Anspruch 3, gekennzeichnet dadurch, daß die zweite Schicht umfaßt:
(a) mindestens 20 % Bindemittel bezogen auf das gesamte Feststoffgewicht der Zusammensetzung, und
(b) mindestens 0,05 % Fluorchemikalie bezogen auf das gesamte Feststoffgewicht der Zusammensetzung.

5. Schleifelement nach einem der vorausgehenden Ansprüche, gekennzeichnet dadurch, daß das Fluorpolymer aus fluorierten Acrylaten und modifizierten Acrylaten, fluorierten Urethanen, fluorierten Polyestern, fluorierten Polycarbodiimiden und deren Copolymeren ausgewählt wird.

6. Schleifelement nach einem der vorausgehenden Ansprüche, gekennzeichnet dadurch, daß das Fluorpolymer fluorierte Acrylatmonomere mit einem Kern der allgemeinen Formel (I) 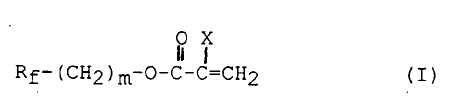 umfaßt, in der
R_{f} für einen fluorierten aliphatischen Rest steht,
X aus einem Wasserstoffatom und Alkylresten, die bis zu 5 Kohlenstoffatome umfassen, ausgewählt wird, und
m gleich 0, 1 oder 2 ist.

7. Schleifelement nach einem der Ansprüche 1 bis 5, gekennzeichnet dadurch, daß das Fluorpolymer fluorierte Acrylatmonomere mit einem Kern der allgemeinen Formel (II) 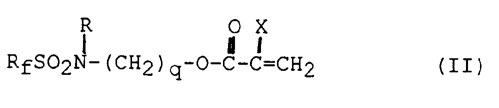 umfaßt, in der
X aus einem Wasserstoffatom und Alkylresten, die bis zu 5 Kohlenstoffatome umfassen, ausgewählt wird,
R_{f} für einen fluorierten aliphatischen Rest steht,
R einen Alkylrest, der bis zu 5 Kohlenstoffatome umfaßt, bedeutet, und
q eine ganze Zahl von 1 bis 11 ist.

8. Schleifelement nach einem der vorausgehenden Ansprüche, gekennzeichnet dadurch, daß das Bindemittel zusätzlich 40 bis 99 % eines Fettsäuresalzes, bezogen auf die Gesamtfestsubstanz der Zusammensetzung, umfaßt.

9. Schleifelement nach einem der vorausgehenden Ansprüche, gekennzeichnet dadurch, daß das Bindemittel zusätzlich ein antistatisches Mittel umfaßt, das aus Ruß, Graphit und Metallspänen ausgewählt wird.

10. Verfahren zur Herstellung eines Schleifelementes mit einer verringerten Neigung zum Verschmieren, das das Bereitstellen einer Fluorchemikalie in dem Bindemittel, welches die äußerste Oberfläche des Elementes zwischen den Schleifmittelpartikeln aufbaut, umfaßt, wobei die Fluorchemikalie ausgewählt wird aus Verbindungen, die einen fluorierten aliphatischen Rest, gebunden an einen polaren Rest oder eine polare Einheit, sowie Fluorpolymere umfassen, die ein Molekulargewicht von mindestens 750 haben und eine nicht-fluorierte polymere Hauptkette umfassen mit einer Mehrzahl fluorierter aliphatischer Seitenreste, wobei diese aliphatischen Reste, je nachdem, was größer ist, entweder
(a) ein Minimum von drei C-F-Bindungen umfassen, oder
(b) in ihnen 25 % der C-H-Bindungen durch C-F-Bindungen ersetzt sind, sodaß die Fluorchemikalie mindestens 15 Gew.-% Fluor umfaßt.

## Revendications

1. Elément abrasif comprenant un substrat ayant à sa surface des particules d'une matière abrasive fixées par un milieu liant non métallique, caractérisé en ce qu'au moins la surface externe de l'élément entre les particules de matière abrasive contient un agent fluorochimique choisi parmi les composés comprenant un groupe aliphatique fluoré attaché à un groupe ou une fraction polaire et des fluoropolymères ayant un poids moléculaire d'au moins 750 et comprenant une ossature polymérique non fluorée ayant plusieurs groupes aliphatiques pendants, lesdits groupes aliphatiques comprenant la plus grande quantité possible de
a) un minimum de trois liaisons C-F, ou
b) où 25% des liaisons C-H ont été remplacées par des liaisons C-F de manière que l'agent fluoro-chimique contienne au moins 15% en poids de fluor.

2. Elément abrasif selon la revendication 1, caractérisé en ce que le milieu liant non métallique comprend un milieu liant organique.

3. Elément abrasif selon la revendication 1 ou la revendication 2, caractérisé en ce que le milieu liant comprend une première couche proche du substrat et une seconde couche distante du substrat, l'agent fluoro-chimique étant présent dans la seconde couche.

4. Elément abrasif selon la revendication 3 caractérisé en ce que la seconde couche comprend:
a) au moins 20% de liant en poids du total des solides de la composition, et
b) au moins 0,05% d'agent fluorochimique en poids du total des solides de la composition.

5. Elément abrasif selon l'une quelconque des revendications précédentes, caractérisé en ce que le fluoropolymère est choisi parmi les acrylates fluorés et les acrylates modifiés, les uréthanes fluorés, les polyesters fluorés, les polycarbodiimides fluorés et leurs copolymères.

6. Elément abrasif selon l'une quelconque des revendications précédentes, caractérisé en ce que le fluoropolymère comprend des monomères d'acrylate fluorés ayant un noyau de formule générale (I): 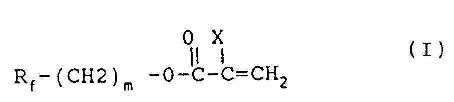 dans laquelle
R_{f} représente un groupe fluoroaliphatique,
X est choisi parmi l'hydrogène et les groupes alcoyle comprenant jusqu'à 5 atomes de carbone, et
m vaut 0, 1 ou 2.

7. Elément abrasif selon l'une quelconque des revendications 1 à 5, caractérisé en ce que le fluoropolymère comprend des monomères d'acrylate fluorés ayant un noyau de formule générale (II): 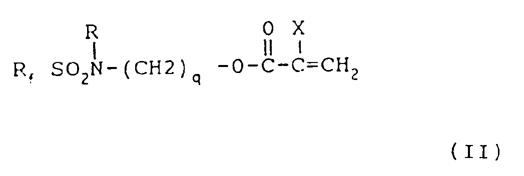 dans laquelle
X est choisi parmi l'hydrogène et les groupes alcoyle comprenant jusqu'à 5 atomes de carbone,
R_{f} représente un groupe fluoroaliphatique,
R représente un groupe alcoyle, comprenant jusqu'à 5 atomes de carbone, et
q est un nombre entier allant de 1 à 11.

8. Elément abrasif selon l'une quelconque des revendications précédentes, carcatérisé en ce que le milieu liant comprend en outre de 40 à 99% du total des solides de la composition d'un sel d'acide gras.

9. Elément abrasif selon l'une quelconque des revendications précédentes, caractérisé en ce que le milieu liant comprend en outre un agent anti-statique choisi parmi le noir de fumée, le graphite et les copeaux métalliques.

10. Procédé de préparation d'un élément abrasif ayant une propension réduite à charger, lequel procédé comprend la fourniture d'un agent fluorochimique dans le milieu liant qui constitue la surface la plus externe de l'élément entre les particules de matière abrasive, où l'agent fluorochimique est choisi parmi les composés comprenant un groupe aliphatique fluoré attaché à un groupe ou fraction polaire et des fluoropolymères ayant un poids moléculaire d'au moins 750 et comprenant une ossature polymérique non fluorée ayant plusieurs groupes aliphatiques fluorés pendants, lesdits groupes aliphatiques comprenant la plus grande quantité possible de
a) un minimum de trois liaisons C-F, ou
b) où 25% des liaisons C-H ont été remplacées par des liaisons C-F de manière que l'agent fluoro-chimique contienne au moins 15% en poids de fluor.
